# EUROPÄISCHE PATENTSCHRIFT

(11) **EP 2 713 187 B1**
(45) Veröffentlichungstag und Bekanntmachung des Hinweises auf die Patenterteilung: **22.06.2016**
(21) Anmeldenummer: 12186667.7
(22) Anmeldetag: 28.09.2012
(51) Int. Cl.: G10K 15/02, G01V 8/20, F16P 3/14

(54) **Lichtgitter und Verfahren zur Überwachung eines Überwachungsbereichs**
Light grid and device for surveillance of a monitoring area
Grille lumineuse et procédé destinés à la surveillance d'une zone de surveillance

(43) Veröffentlichungstag der Anmeldung: 02.04.2014
(73) Patentinhaber: SICK AG, 79183 Waldkirch (DE)
(72) Erfinder: Bürger, Jürgen, 79331 Nimburg (DE); Kienzler, Stefan, 79874 Breitnau (DE)
(74) Vertreter: Hehl, Ulrich

(56) Entgegenhaltungen:
- DE-A1- 4 324 590
- DE-U1-202007 014 387
- US-A- 3 805 061
- US-A- 5 130 532
- US-A- 5 567 931
- US-B1- 6 236 036

## Beschreibung

Die Erfindung betrifft ein Lichtgitter und ein Verfahren zur Überwachung eines Überwachungsbereichs mit einer Vielzahl von Überwachungslichtstrahlen nach dem Oberbegriff von Anspruch 1 beziehungsweise 11.

Ein Lichtgitter besteht im Prinzip aus einer Vielzahl parallel zueinander angeordneter Lichtschranken. Es erkennt demnach Objekte anhand einer Strahlunterbrechung. Dabei sind üblicherweise die Sender und die Empfänger in jeweils einem gemeinsamen stabförmigen Gehäuse zusammengefasst, die sich gegenüberstehen und über die Vielzahl paralleler Überwachungsstahlen ein zweidimensionales Überwachungsfeld aufspannen.

Mit einem Lichtgitter können Objekte vermessen werden, indem bestimmt wird, welche Strahlen bei Durchtritt des Objekts durch das Überwachungsfeld unterbrochen sind. Lichtgitter werden auch in der Sicherheitstechnik eingesetzt, um auf einen unerlaubten Eingriff in das Überwachungsfeld hin eine Sicherungsmaßnahme einzuleiten, etwa das Abschalten einer überwachten Maschine. Man bezeichnet Lichtgitter in der ersten Anwendungsgruppe auch als Automatisierungslichtgitter, in der zweiten Anwendungsgruppe als Sicherheitslichtgitter.

Die einzelnen Überwachungsstrahlen können praktisch nicht so stark gebündelt und genau ausgerichtet werden, dass sie auch in größeren Abständen zwischen den beiden stabförmigen Gehäusen nur genau den zugehörigen Lichtempfänger überstrahlen. Stattdessen bilden sie sogenannte Keulen mit einem Querschnitt, in dem neben dem zugehörigen Lichtempfänger auch dessen Nachbarn liegen. Um dennoch die eindeutige Zuordnung zwischen Lichtsender und Lichtempfänger zu erhalten und um zu verhindern, dass ein Objekt im Strahlengang übersehen wird, weil sich der zuständige Lichtempfänger in der Sendelichtkeule eines nicht zugeordneten Lichtsenders befindet, werden die Überwachungslichtstrahlen herkömmlich zyklisch betrieben. Dabei werden also nacheinander, meist regelmäßig von oben nach unten oder umgekehrt, jeweils nur ein Paar aus einem Lichtsender und dessen zugehörigem Lichtempfänger gleichzeitig aktiviert. Nach einem solchen Aktivierungszyklus ist dann eindeutig bekannt, ob sich ein Objekt zwischen einem Lichtsender und dessen Lichtempfänger befindet und welches das betreffende Paar ist.

Eine zeitgleiche Auswertung ohne Aktivierungszyklus gibt es nur in Ausnahmefällen, etwa bei Rahmenlichtgittern. Dabei wird der Schaltzustand der einzelnen Überwachungsstrahlen mit einem logischen ODER verknüpft, d.h. das Lichtgitter schaltet, wenn irgendein Überwachungsstrahl unterbrochen ist. Eine Aussage über den Unterbrechungsort ist dabei nicht möglich.

Aus der Zykluszeit, also der Zeit, bis alle Überwachungsstrahlen einmal aktiviert wurden, ergeben sich Ansprechzeit, Schaltfrequenz und Wiederholgenauigkeit des Lichtgitters. Die Zykluszeit bestimmt sich folglich als das Produkt der Auswertezeit eines Überwachungsstrahls und der Strahlanzahl. Mit Erhöhung der Strahlanzahl vergrößert sich die Zykluszeit mit entsprechend negativem Einfluss auf die genannten Parameter und die Anwendung. Wenn die Strahlanzahl groß wird, wobei mehrere hundert durchaus denkbar sind, wird dieser Effekt problematisch. Die Zykluszeit lässt sich dann nur durch Verwendung höherer Übertragungsbandbreiten reduzieren, aber dies ist ein großer Nachteil in Bezug auf Herstellkosten und Empfindlichkeit.

Die Signale der verschiedenen Lichtempfänger werden zentral beispielsweise in einem Mikroprozessor gesammelt, um auszuwerten, welche Strahlen unterbrochen sind. Dazu sind entsprechende Verbindungen zwischen Lichtempfängern und Mikroprozessor erforderlich.

Aus der DE 10 2007 024 210 A1 ist ein optoelektronischer Sensor zum Absichern eines Gefahrenbereichs bekannt, bei dem die Sendestrahlen abschnittsweise sequentiell erzeugt werden. Dies bedeutet, dass die Sendestrahlen nur auf einen Abschnitt des Sensors bezogen zeitlich nacheinander und einander ausschließend erzeugt werden. Jeder solche Abschnitt entspricht einem Modul, dem ein eigener Auswertungsschaltkreis zugeordnet ist. Die Auswertungsschaltungen ihrerseits sind parallel zueinander an eine Busverbindung angeschlossen. Durch die modulare Auswertung werden Konflikte auf dem Bus vermieden, in denen mehrere Überwachungsstrahlen gleichzeitig eine Unterbrechung melden wollen. Außerdem befasst sich die DE 10 2007 024 210 A1 mit einem Sicherheitslichtgitter, bei dem irrelevant ist, welcher Strahl unterbrochen ist, da unabhängig vom Ort des Eingriffs ein sicherheitsgerichtetes Abschaltsignal ausgegeben wird. Es wäre daher nicht schädlich, wenn zwei Auswertungsschaltungen gleichzeitig ein Abschaltsignal über den Bus zu übertragen versuchen.

Auch die EP 1 903 356 A1 offenbart ein Lichtgitter, bei dem ein Bus mit der Auswerteeinheit und allen Empfangselementen verbunden ist. Da hier ein herkömmlicher Zyklus mit sequentieller Aktivierung aller Lichtstrahlen verwendet wird, kann es nicht zu zeitgleichen Zugriffen auf den Bus durch mehrere Lichtempfangselemente kommen, die eine Strahlunterbrechung kommunizieren wollen.

Aus der US 5,130,532 ist ein Lichtgitter bekannt, bei dem zyklisch jeweils genau ein Lichtsender und ein Lichtempfänger aktiviert werden. Empfangsseitig werden die Lichtempfänger über jeweils einen Schalter mit einer gemeinsamen Multiplexleitung verbunden. Von diesen Schaltern wird über ein Taktsignal nacheinander jeweils der zu dem aktiven Kanal gehörige Schalter geschlossen, während alle anderen Schalter offen bleiben. Zwischen den Abtastzyklen beim Übergang der Abtastung von einem letzten zu einem ersten Kanal ist eine Synchronisationspause vorgesehen.

Die US 3,805,061 zeigt eine Objekterkennungsvorrichtung mit einer Vielzahl von einander paarweise zugeordneten Lichtsendern und Lichtempfängern. Die Paare sind modular zu mehreren Gruppen zusammengefasst. Paare einer Gruppe werden stroboskopisch und gleichzeitig mit Paaren der anderen Gruppe betrieben.

Eine besondere Herausforderung bei der Erkennung einer Strahlunterbrechung stellen transparente Objekte dar. Das liegt daran, dass die Schaltschwelle sehr nahe an den Pegel für einen freien Lichtweg gesetzt werden muss, denn das transparente Objekt transmittiert im Gegensatz zu einem undurchsichtigen Objekt auch dann noch einen erheblichen Anteil des Sendelichts, wenn es sich im Strahlengang befindet. Die knappe Einstellung der Schaltschwelle ist sehr kritisch, weil die Empfangspegel aufgrund von Alterung, Verschmutzung oder Temperatureinflüssen nicht stabil bleiben. Die Verfügbarkeit solcher Sensoren wird dadurch stark eingeschränkt.

Im Stand der Technik sind für den Fall mit nur einem Strahl, also im Lichtschrankenumfeld, sogenannte Glaslichtschranken bekannt, welche ihren aktuellen Empfangspegel bei freiem Lichtweg sporadisch durch Vergleich eines analogen Messwerts mit einem Initialisierungswert überprüfen. Wird dann ein Abfallen des Empfangspegels festgestellt, wird die Schaltschwelle entsprechend angepasst. Diese Überprüfung erfolgt in einem zeitbasierten Verfahren nach bestimmten Zeitabständen oder in einem ereignisbasierten Verfahren immer dann, wenn die Lichtschranke nach einem Objekteingriff in den Zustand Lichtweg frei übergeht.

Der Aufwand zur Schwellennachführung in der Steuerung ist recht hoch, und die Pegelüberprüfung müsste bei einem Lichtgitter für jeden Strahl einzeln durchgeführt werden. Zudem muss für die Messung der Analogwerte die normale Schaltzustandsauswertung kurzzeitig unterbrochen werden, wodurch sich auch unabhängig vom Aufwand die Ansprechzeit erhöht. Das ist insgesamt nicht praktikabel, und deshalb sind herkömmliche Lichtgitter nicht in der Lage, transparente Objekte zuverlässig zu detektieren.

Es ist daher Aufgabe der Erfindung, eine kürzere Zykluszeit mit weniger Aufwand zu erreichen. Zudem soll vorzugsweise das Lichtgitter auch in der Lage sein, transparente Objekte zu erkennen.

Diese Aufgabe wird durch ein Lichtgitter und ein Verfahren zur Überwachung eines Überwachungsbereichs mit einer Vielzahl von Überwachungslichtstrahlen nach Anspruch 1 beziehungsweise 11 gelöst. Dabei geht die Erfindung von dem Grundgedanken aus, die Objektfeststellungssignale der einzelnen Überwachungslichtstrahlen über einen Bus zu einer Steuerung zu übertragen und etwaige Konflikte durch zeitgleich zu kommunizierende Strahlunterbrechungen über ein Zeitmultiplexing zu verhindern. Dadurch wird ermöglicht, mehrere Überwachungslichtstrahlen parallel zu aktivieren und den üblichen Aktivierungszyklus auf Gruppen zu beschränken. Die Zykluszeit wird deshalb nicht mehr von der Gesamtanzahl der Überwachungslichtstrahlen, sondern nur noch der je nach Gruppengröße wesentlich geringeren Anzahl Überwachungslichtstrahlen je Gruppe bestimmt. Dabei bedeutet Aktivieren eines Überwachungslichtstrahls, dass gleichzeitig für eine gewisse Dauer ein Lichtsender und der zugehörige Lichtempfänger aktiviert werden, um festzustellen, ob sich in dem dadurch aufgespannten Überwachungslichtstrahl ein Objekt befindet.

Das erfindungsgemäße Lichtgitter zeigt demnach den herkömmlichen Grundaufbau, bei dem je ein Paar Lichtsender und Lichtempfänger ähnlich einer Lichtschranke einen Überwachungslichtstrahl bilden. Die Überwachungslichtstrahlen in ihrer Gesamtheit wiederum liegen vorzugsweise, aber nicht notwendig parallel und äquidistant zueinander in einer gemeinsamen Ebene und bilden so einen Überwachungsbereich. Die Auswertung der Überwachungslichtstrahlen erfolgt dabei einerseits strahlbezogen und dezentral in dem Lichtempfänger und andererseits übergeordnet für alle Überwachungslichtstrahlen in der zentralen Steuerung. Dazu weist der Lichtempfänger vorzugsweise neben dem eigentlichen Lichtempfangselement in Form einer Fotodiode oder dergleichen auch eine auf seinen Strahl bezogene Pegelauswertung beispielsweise in Form eines ASICs auf.

Die Erfindung hat den Vorteil, dass die Zykluszeit des gesamten Lichtgitters, also die Zeit, nach der alle Überwachungslichtstrahlen einmal aktiviert wurden, erheblich verkürzt werden kann. Dies ist in dem Maße möglich, in dem eine gegenseitige optische Beeinflussung durch Überwachungslichtstrahlen verschiedener Gruppen nicht mehr gegeben ist, was bei Lichtgittern mit vielen Überwachungslichtstrahlen leicht in verschiedensten Gruppenzuordnungen gewährleistet werden kann. Die Zykluszeit für einen einzelnen Strahl, die sich nur mit hohem Aufwand und unter Verlust von Empfindlichkeit verringern ließe, kann dabei unverändert bleiben. Der Aufwand für die Kommunikation der Objektfeststellungssignale zu der Steuerung bleibt äußerst gering, und Buskonflikte werden auf einfache Weise vermieden.

Das Objektfeststellungssignal ist ein Schaltpuls. Damit ist es ein binäres Signal, welches mit nur einem Bit Bandbreite übertragbar ist. Das Objektfeststellungssignal wird in Analogie zu schaltenden Lichtschranken auch als Schaltsignal bezeichnet.

Das Zeitmultiplexverfahren ist durch eine dem Schaltpuls aufgeprägte Verzögerung umgesetzt. Dies realisiert das Zeitmultiplexing auf einfache Weise, ohne dass eine höhere Instanz Zeitschlitze zuweisen müsste. Vorzugsweise ist die Verzögerung eine für alle Überwachungslichtstrahlen einer Gruppe gemeinsame und zwischen den Gruppen unterschiedliche Verzögerung. Jede Gruppe besitzt also eine ihr zugewiesene Verzögerung, mit der überschneidungsfrei zu anderen Gruppen das Objektfeststellungssignal an die Steuerung übertragen wird. Dadurch ist sichergestellt, dass bei gruppenweise paralleler Überwachungssequenz jeder Lichtempfänger kollisionsfrei sein Objektfeststellungssignal über den Bus an die Steuerung ausgeben kann.

Der erste Bus weist bevorzugt für Objektfeststellungssignale nur eine 1-Bit-Leitung auf. Die Bandbreite der Datenleitung ist demnach auf ein Minimum reduziert, genügt aber aufgrund des erfindungsgemäßen Zeitmultiplexings zur Übertragung auch der gleichzeitig bestimmten Objektfeststellungssignäle. Es fällt wenig Verdrahtungsaufwand- an, und es genügen einfache Busanschlüsse an Lichtempfängern und Steuerung.

Das Objektfeststellungssignal ist bevorzugt durch Vergleich der Empfangsintensität des Überwachungslichtstrahls in dem Lichtempfänger mit einer Schaltschwelle gewonnen. Dies ist eine einfache und robuste Möglichkeit, eine Strahlunterbrechung zu detektieren. Die Schaltschwelle ist in den Lichtempfängern vorgegeben oder wird anfänglich eingelernt. Der Wert der Schaltschwelle sollte so gesetzt sein, dass mit einer gewissen Funktionsreserve erkannt wird, wenn die erwartete Empfangsintensität für einen freien Strahlengang unterschritten ist, weil ein Objekt den Überwachungslichtstrahl mindestens teilweise verdeckt.

Die Steuerung ist bevorzugt dafür ausgebildet, die Schaltschwelle dynamisch nachzuführen. Dazu wird bestimmt, ob sich die empfangene Intensität des Überwachungslichtstrahls bei freiem Strahlengang gegenüber einem zuvor oder anfänglich gemessenen Wert beispielsweise aufgrund von Verschmutzung, Temperatureinflüssen oder Alterung signifikant verändert hat. Eine Schwellennachführung ist besonders für die Erkennung transparenter Objekte nützlich oder sogar erforderlich, denn hier ist der Intensitätsunterschied zwischen freiem und unterbrochenem Überwachungslichtstrahl besonders gering, so dass die Schaltschwelle nahe bei der Empfangsintensität des freien Überwachungslichtstrahls gesetzt und damit sehr empfindlich gegenüber Driften ist.

Die Lichtempfänger sind bevorzugt dafür ausgebildet, anhand eines Schwellenver-. gleichs der Empfangsintensität des Überwachungslichtstrahls mit einer Vorausfallschwelle ein Absinken des Empfangspegels bei freiem Lichtweg zu erkennen. Anhand der Vorausfallschwelle lässt sich auf einfache Weise erkennen, ob der Empfangspegel noch ausreicht, beziehungsweise ob die Schaltschwelle noch nahe genug an dem Empfangspegel des freien Strahlengangs liegt, um auch transparente Objekte zuverlässig zu erkennen.

Die Lichtempfänger sind bevorzugt dafür ausgebildet, das Absinken des Empfangspegels bei freiem Lichtweg als binäres Vorausfallsignal je nach Ergebnis des Schwellenvergleichs auszugeben. Ähnlich dem Schaltereignis wird dabei auch die Vorausfallmeldung beziehungsweise das Signal zur Anpassung der Schwellen als einfaches binäres Signal verarbeitet, welches besonders einfach erhalten, kommuniziert und ausgewertet werden kann.

Die Steuerung ist bevorzugt dafür ausgebildet, die binären Vorausfallsignale, insbesondere je Überwachungslichtstrahl, in einem Zähler zu akkumulieren und bei Überschreiten oder Unterschreiten eines Vorgabezählerstandes die Schaltschwelle und/oder die Vorausfallschwelle anzupassen. Dabei wird beispielsweise für eine binäre Null der Zähler einmal dekrementiert und für eine binäre Eins einmal inkrementiert. Bei bloß statistischen Änderungen schwankt der Zähler um Null, driftet aber gegen den Vorgabezählerstand, wenn sich der Empfangspegel systematisch ändert. Dann erfolgt eine Anpassung oder Nachführung der Schwellen in Richtung der systematischen Abweichung und in einem Maße, welches mit dem Vorgabezählerstand korrespondiert. So kann der Signalwert für einen freien Überwachungslichtstrahl mit lediglich einem einfachen 1-Bit-Wert je Strahl in jeder Messung auf Strahlunterbrechung mit überwacht werden. In der Auswertung der Lichtempfänger ist dafür nur ein Schwellenvergleich, in der Steuerung nur eine Zählfunktion erforderlich, wodurch sich der Aufwand gegenüber einer herkömmlichen Schwellennachführung in einer Glaslichtschranke drastisch reduziert, die zu langsam wäre und dabei auch große Rechenkapazität fordert. Die mit der Vorausfallschwelle erhaltene Information wird quasi mit der ohnehin erforderlichen Messung zur Detektion von Strahlunterbrechungen mitgeliefert, so dass die Ansprechzeit unverändert bleibt. Die für Glaslichtschranken übliche Unterscheidung zwischen zeit- und ereignisbasierten Verfahren entfällt. Die Regelgeschwindigkeit kann über den Vorgabezählerstand parametriert werden.

Vorzugsweise ist ein zweiter Bus vorgesehen, um das Vorausfallsignal von den Lichtempfängern zu der Steuerung zu kommunizieren, insbesondere mit nur einer 1-Bit-Leitung für das Vorausfallsignal. Somit wird analog zur Übertragung der Objektfeststellungssignale auch das Vorausfallsignal für den Zähler in der Steuerung mit wenig Aufwand übertragen. Für das binäre Vorausfallsignal genügt dabei eine Busleitung mit nur einem Bit Datenbandbreite.

Der erste Bus und der zweite Bus sind bevorzugt als ein gemeinsamer Bus ausgebildet. Damit können Busanschlüsse und Bussteuerung gemeinsam genutzt werden.

Noch bevorzugter weist der gemeinsame Bus für die Kommunikation des Objektfeststellungssignals und des Vorausfallsignals nur eine einzige 1-Bit-Leitung auf, indem Objektfeststellungssignal und Vorausfallsignal einen unterschiedlichen zeitlichen Versatz erhalten. Damit entsprechen erster und zweiter Bus einander vollständig, und es genügt insgesamt für die Kommunikation von Objektfeststellungssignal und Vorausfallsignal eine einzige Datenleitung mit einer Bandbreite von nur einem Bit. Es findet praktisch ein doppeltes Multiplexing statt, um einmal die Signale von verschiedenen Gruppen, zum anderen das Objektfeststellungssignal und das Vorausfallsignal voneinander zu trennen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines Lichtgitters mit Überwachungslichtstrahlen und Bus zur Kommunikation von Objektfeststellungssignalen in einem Zeitmultiplexverfahren;
- Fig. 2: einen beispielhaften zeitabhängigen Intensitätsverlauf eines Überwachungslichtstrahls bei Durchfahren eines transparenten Objekts;
- Fig. 3: eine schematische Schnittansicht eines Lichtgitters ähnlich Figur 1 mit zusätzlicher Kommunikation von Vorausfallsignalen auf einem Bus; und
- Fig. 4: ein beispielhafter zeitlicher Verlauf eines Zählers, der Vorausfallsignale und zum Erkennen einer Drift akkumuliert.

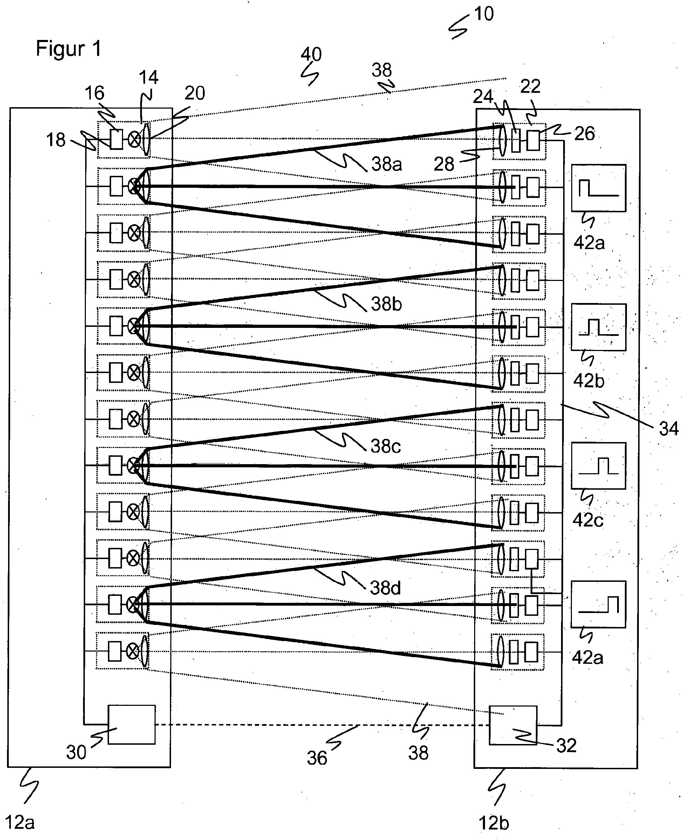

Figur 1 zeigt in einer schematischen Schnittansicht ein Lichtgitter 10, insbesondere ein Automatisierungslichtgitter. Ein stabförmiges Sendeteil 12a und ein stabförmiges Empfangsteil 12b stehen einander gegenüber. Das Sendeteil 12a weist eine Vielzahl von Lichtsendern 14 mit jeweils einer Lichtquelle 16, beispielsweise einer LED oder einer Laserdiode, einer Senderansteuerung 18 zur Aktivierung der Lichtquelle und einer Sendeoptik 20 auf. Entsprechend ist in dem Empfangsteil 12b eine Vielzahl von jeweils einem Lichtsender 14 zugeordneten Lichtempfängern 22 mit jeweils einem Lichtempfangselement 24, beispielsweise einer Photodiode, einer Lichtempfängersteuerung 26 und einer Empfangsoptik 28 vorgesehen. Die Senderansteuerung 18 und die Lichtempfängersteuerung 28 sind beispielsweise als ASIC (Application Specific Integrated Circuit) ausgebildet, und abweichend von der Darstellung können sie jeweils für zwei oder mehr Lichtquellen 16 beziehungsweise Lichtempfangselemente 24 zuständig sein.

Eine zentrale sendeseitige Steuerung 30 ist mit den Lichtsendern 14 und eine zentrale empfangsseitige Steuerung 32 mit den Lichtempfängern 22 verbunden. Zumindest auf Empfangsseite ist die Verbindung als Bus 34 realisiert, insbesondere als ein differentieller Datenbus. Der Bus 34 weist vorzugsweise nur eine 1-Bit-Datenleitung auf. Wie durch eine gestrichelte Linie 36 gezeigt, sind die beiden Steuerungen untereinander verbunden, wobei anstelle einer an sich denkbaren Leitungsverbindung zur Vermeidung des Verdrahtungsaufwands vorzugsweise nur eine optische Synchronisation erfolgt.

Die Lichtsender 14 und die Lichtempfänger 22 spannen zwischen sich jeweils einen Überwachungslichtstrahl 38 und damit in ihrer Gesamtheit ein zweidimensionales, ebenes Überwachungsfeld 40 auf. Die jeweilige Lichtempfängersteuerung 26 erkennt beispielsweise anhand eines Schwellenvergleichs der gemessenen Empfangsintensität mit einer vorgegebenen Schaltschwelle, ob der ihr zugeordnete Überwachungslichtstrahl 38 durch ein Objekt in dem Überwachungslichtstrahl 38 unterbrochen wird oder nicht, und gibt gegebenenfalls über den Bus 34 ein entsprechendes Objektfeststellungssignal 42a-d an die empfangsseitige Steuerung 32 aus. In der empfangsseitigen Steuerung 32 werden die Schaltsignale 42a-d ausgewertet, um an einem nicht dargestellten Ausgang des Lichtgitters 10 ein Signal zur Verfügung zu stellen, welches angibt, welche Überwachungslichtstrahlen 38 unterbrochen sind, je nach Ausführungsform auch alternativ oder zusätzlich ein Schaltsignal, ob überhaupt ein Überwachungslichtstrahl 38 unterbrochen ist.

Wie bereits einleitend erläutert, weiten sich die Überwachungslichtstrahlen mit zunehmendem Abstand zwischen Sendeteil 12a und Empfangsteil 12b auf, bilden somit Strahlkegel oder Strahlkeulen. Genaugenommen gilt dies sowohl sendeseitig als auch empfangsseitig. Zur Vereinfachung der Darstellung sind aber nur die Sendekeulen gezeigt. Der eigentliche Überwachungsbereich eines Überwachungslichtstrahls 38 ist dann der Überlappungsbereich von Sendekeule und Empfangskeule.

Die Überwachungslichtstrahlen 38 werden aufgrund der Aufweitung nicht nur von dem zugehörigen Lichtempfänger 22 registriert, sondern auch von dessen Nachbarn erster und gegebenenfalls auch höherer Ordnung. Dieser Effekt ist unerwünscht, weil dadurch die eindeutige Zuordnung eines Objekteingriffs zu einem Überwachungslichtstrahl 38 verloren geht und ein Objekteingriff sogar übersehen werden kann, wenn ein Lichtempfänger 22 trotz Unterbrechung des direkten Lichtwegs zu dem zugehörigen Lichtsender 14 einen überschwelligen Empfangslichtpegel durch benachbarte Lichtsender 14 empfängt.

Aus diesem Grund aktivieren die sendeseitige Steuerung 30 und die empfangsseitige Steuerung 32 in einer gruppenweise parallelen Überwachungssequenz jeweils nur bestimmte Überwachungslichtstrahlen 38a-d gleichzeitig. Dazu werden Gruppen von Überwachungslichtstrahlen 38a-d gebildet. Die Gruppen sind nicht zwangsläufig baulich getrennt, obwohl ein solcher modularer Lichtgitteraufbau möglich ist, sondern es genügt eine entsprechende Zuordnung in den Steuerungen 30, 32.

Die gleichzeitig aktivierten Überwachungslichtstrahlen 38a-d liegen weit genug auseinander, damit ein Übersprechen zwischen Überwachungslichtstrahlen 38a-d aufgrund der Strahlaufweitung verhindert wird. Es wird demnach geometrisch ausgeschlossen, dass sich Sendelichtkeule und Empfangslichtkeule eines aktiven Lichtsenders aus einer Gruppe und eines zeitgleich aktiven Lichtempfängers aus einer anderen Gruppe überschneiden. Am einfachsten wird dies über eine Mindestgröße der Gruppen realisiert, bei welcher der Durchmesser der Sende- und Empfangslichtkeulen kleiner ist als der Abstand zwischen den Gruppen. Diese Mindestgröße hängt von dem Abstand zwischen Sendeteil 12a und dem Empfangsteil 12b ab, kann aber einfach auf die tatsächliche oder eine maximale Reichweite abgestimmt werden. Nochmals anders ausgedrückt werden ab einem gewissen Strahlabstand, der durch die Abstrahl- beziehungsweise Empfangscharakteristik gegeben ist, parallel zu einem ersten sequentiellen Durchlauf durch die Überwachungslichtstrahlen 38 der ersten Gruppe mit dem Überwachungslichtstrahl 38a weitere sequentielle Durchläufe durch die Überwachungslichtstrahlen 38 der weiteren Gruppen mit den Überwachungslichtstrahlen 38b-d durchgeführt.

Durch die gruppenweise parallele Überwachungssequenz wird der herkömmliche rein sequentielle Zyklus um einen Faktor beschleunigt, welcher der Gruppenanzahl entspricht. Allerdings ergibt sich ein Problem, wenn mehrere der gleichzeitig aktiven Lichtempfänger ein Objektfeststellungssignal 42a-d ausgeben wollen, weil dann mehrere Schaltsignale auf der 1-Bit-Leitung des Busses 34 kollidieren. Damit es nicht zu diesem Buskonflikt kommt, erfolgt die Ausgabe des Objektfeststellungssignals 42a-d am Ende eines jeden Einzelstrahlzyklus' über einen kurzen Schaltimpuls. Jedem Überwachungslichtstrahl 38a-d ist eine andere Verzögerung zugeordnet. Das Lichtgitter 10 dazu vorzugsweise in unterschiedliche Bereiche mit unterschiedlicher Verzögerung aufgeteilt, die insbesondere den Gruppen entsprechen, und jeder Bereich nutzt eine andere Verzögerung. Durch dieses Zeitmultiplexing kann die Auswertung parallel gestaltet und dennoch ein Bus geringster Bandbreite verwendet werden.

Die in der Lichtempfängersteuerung 26 empfangene Lichtintensität unterliegt im Laufe des Betriebs einer Drift aufgrund von Alterungseffekten, Verschmutzung oder Temperaturschwankungen. Es kann dann trotz freiem Überwachungslichtstrahl 39 zu Schwellunterschreitungen kommen. Deshalb ist in einer weiteren bevorzugten Ausführungsform vorgesehen, diese Schaltschwellen nachzuführen, indem Veränderungen der Empfangsintensität bei freiem Lichtweg bestimmt werden.

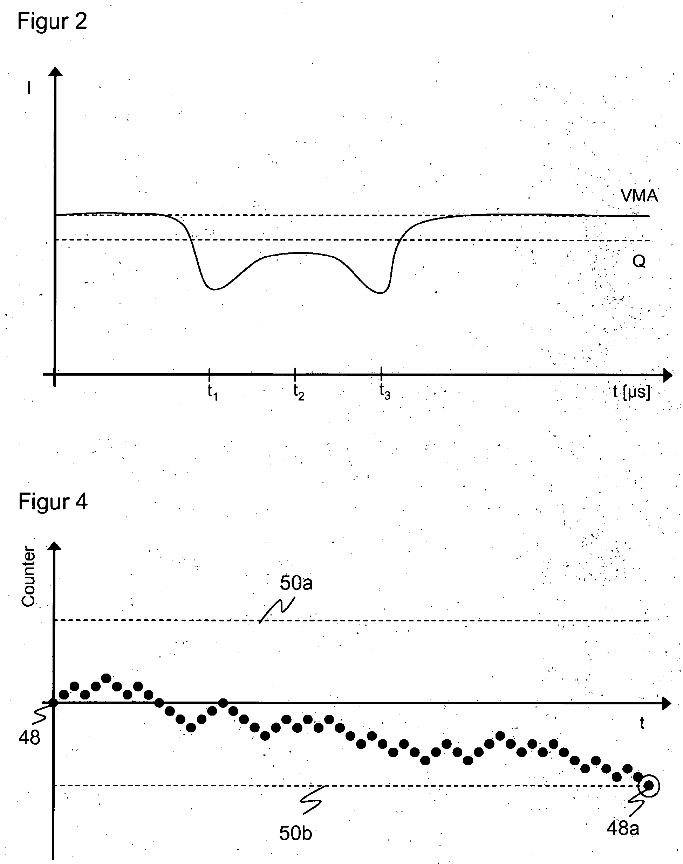

Dies ist besonders wichtig, wenn transparente Objekte erkannt werden sollen. Figur 2 zeigt zur Erläuterung einen rein beispielhaften zeitabhängigen Intensitätsverlauf für einen Überwachungslichtstrahl 38 bei Durchfahren einer Glasflasche. Der Empfangspegel fällt zwar unter die mit Q bezeichnete Schaltschwelle, wenn um den Zeitpunkt t₁ der Rand der Glasflasche in den Überwachungslichtstrahl 38 einfährt, aber wegen der Transparenz längst nicht so deutlich, wie dies für ein undurchsichtiges Objekt der Fall wäre. Wenn um einen Zeitpunkt t₂ die Mitte der Glasflasche in den Überwachungslichtstrahl 38 eingetreten ist, hebt sich der Empfangspegel sogar noch weiter an, weil die Glasflasche wie eine Zylinderlinse wirkt. Um einen Zeitpunkt t₃ fällt der Empfangspegel dann mit Durchtritt des anderen Randes der Glasflasche ein weiteres Mal ab.

Wegen der knappen Abstände zwischen dem Empfangspegel mit dem transparenten Objekt im Überwachungslichtstrahl 38 muss die Schaltschwelle sehr dicht an den Empfangspegel bei freiem Lichtweg gesetzt werden. Wenn nun der allgemeine Empfangspegel aufgrund von Driften absinkt, kann es zu Fehlschaltungen kommen.

Um dies rechtzeitig zu erkennen, wird neben der Schaltschwelle Q eine zusätzliche Vorausfallschwelle oder Nachführungsschwelle VMA überwacht. Diese Schwelle wird vorzugsweise gerade auf den Empfangspegel des freien Lichtwegs gelegt und ist hysteresefrei.

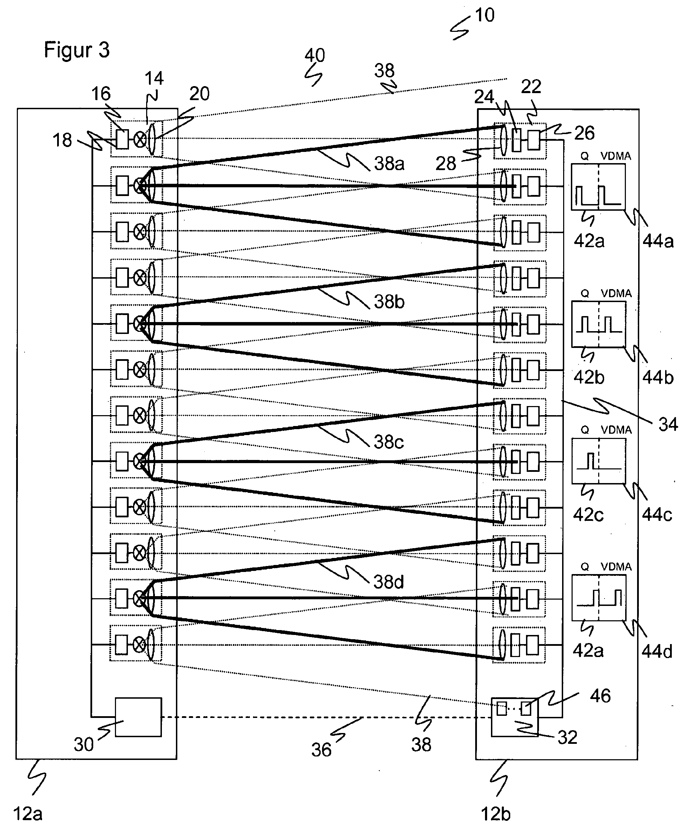

Figur 3 zeigt in einer Schnittansicht ähnlich der Figur 1 eine Ausführungsform eines Lichtgitters 10 mit zusätzlicher Schwellennachführung. Die Lichtempfängersteuerungen 26 geben hier nicht nur das Objektfeststellungssignal 42a-d, sondern zusätzlich ein Vorausfall- oder Nachführungssignal 44a-d als Ergebnis einer zweiten Schwellbewertung mit der Vorausfallschwelle VMA aus. Wie das Objektfeststellungssignal 42a-d ist auch das Vorausfallsignal 44a-d vorzugsweise binär und wird als kurzer Schaltpuls über den Bus 34 kommuniziert. Dazu kann prinzipiell ein zweiter Bus oder zumindest eine eigene Busleitung vorgesehen sein. Bevorzugt wird aber auch das Vorausfallsignal 44a-d auf derselben 1-Bit-Busleitung kommuniziert wie das Objektfeststellungssignal 42a-d. Dazu wird eine zusätzliche Verzögerung eingeführt, welche die Objektfeststellungssignale 42a-d und die Vorausfallsignals 44a-d voneinander trennt. In dem Beispiel der Figur 3 gibt es somit zunächst einen Zeitschlitz für die Übertragung der mit Q bezeichneten Objektfeststellungssignale 42a-d und dann einen Zeitschlitz für die Übertragung der mit VMA bezeichneten Vorausfallsignale 44a-d. Diese Zuordnung der Verzögerungen und Zeitschlitze ist nur besonders übersichtlich, andere Multiplexingschemata sind ebenso denkbar. Prinzipiell kann für jede Gruppe und Kategorie, also Q oder VMA, eine beliebige spezifische Verzögerung vorgegeben werden, womit die Zeitschlitze beliebig vertauschbar sind.

Die Vorausfallsignale 44a-d werden nur als 1-Bit-Wert übertragen, so dass der Bus 34 mit der geringst möglichen Bandbreite ausgebildet werden kann. Um die Vorausfalisignale 44a-d in der empfangsseitigen Steuerung 32 auszuwerten, ist dort für jeden Überwachungslichtstrahl 38 jeweils ein Zähler 46 vorgesehen, welcher die Vorausfallssignale 44a-d über eine längere Zeitspanne akkumuliert.

Figur 4 zeigt einen beispielhaften zeitlichen Verlauf eines solchen Zählers 46 für einen Überwachungslichtstrahl 38. Jeder Punkt 48 steht für einen Aktivierungszyklus. Der Zähler wird anfänglich mit Null initialisiert. Immer wenn die zugeordnete Lichtempfängersteuerung 26 einen Empfangspegel oberhalb der Vorausfallschwelle misst, wird ein Vorausfallsignal 44a, 44b, 44d mit dem binären Wert Eins empfangen und der Zähler heraufgezählt. Entsprechend wird bei einem Empfangspegel. unterhalb der Vorausfallschwelle ein Vorausfallsignal 44c mit dem binären Wert Null empfangen und der Zähler heruntergezählt. Bei reinem Signalrauschen ist das Vorausfallsignal 44a-d statistisch verteilt, folglich schwankt der Zähler im Mittel um Null. Bei einer Drift, also einer systematischen Änderung des Empfangspegels bei freiem Lichtweg, tendiert der Zähler entsprechend der Driftrichtung nach oben oder nach unten, wobei der üblichere Fall eine Signalabschwächung ist.

Sobald dabei ein als Schwelle 50a-b gesetzter Vorgabezählerstand über- oder unterschritten ist, in dem Beispiel der Figur 4 bei Punkt 48a, erfolgt eine Anpassung der Schaltschwelle Q und der Vorausfallschwelle VMA in der zugehörigen Lichtempfängersteuerung 26. Die empfangsseitige Steuerung 32 kommuniziert dies vorzugsweise über den Bus 34 an die Lichtempfängersteuerung 26. Mit diesem Vorgang werden sowohl die Schaltschwelle Q als auch die Vorausfallschwelle VMA nachgeführt.

Die im Zusammenhang mit den Figuren 2 bis 4 beschriebene Schwellennachführung insbesondere zur Erkennung transparenter Objekte profitiert zwar auch von der Zyklusverkürzung durch eine gruppenweise parallele Überwachungssequenz. Die Schwellennachführung kann aber auch unabhängig von der gruppenweise parallelen Überwachungssequenz eingesetzt werden: Speziell für kurze Lichtgitter 10 mit relativ wenigen Überwachungslichtstrahlen 38 genügt auch ein herkömmlicher rein sequentieller Aktivierungszyklus durch alle Überwachungslichtstrahlen.

## Patentansprüche

1. Lichtgitter (10) mit einer Vielzahl von Lichtsendern (14) zum Aussenden jeweils eines Überwachungslichtstrahls (38) und einer Vielzahl von zugehörigen Lichtempfängern (22), um je nach Empfang des Überwachungslichtstrahls (38) ein Objektfeststellungssignal (42a-d) zu erzeugen, mit einer Steuerung (30, 32), welche dafür ausgebildet ist, die Überwachungslichtstrahlen (38) in Gruppen einzuteilen und nacheinander die Überwachungslichtstrahlen (38) der Gruppen zu aktivieren, wobei in einer gruppenweise parallelen Überwachungssequenz jeweils ein Überwachungslichtstrahl (38) jeder Gruppe parallel aktiviert wird, sowie mit einem ersten Bus (34), über den die Objektfeststellungssignale von den Lichtempfängern (22, 26) an die Steuerung (32) ausgebbar sind,
**dadurch gekennzeichnet,**
**dass** die Lichtempfänger (22, 26) dafür ausgebildet sind, die Objektfeststellungssignale in einem Zeitmultiplexverfahren an die Steuerung (32) auszugeben, dass das Objektfeststellungssignal (42a-d) ein Schaltpuls ist, und dass das Zeitmultiplexverfahren durch eine dem Objektfeststellungssignal (42a-d) aufgeprägte, für alle Überwachungslichtstrahlen (38) einer Gruppe gemeinsame und zwischen den Gruppen unterschiedliche Verzögerung umgesetzt ist.

2. Lichtgitter (10) nach Anspruch 1,
wobei der erste Bus (34) für Objektfeststellungssignale (42a-d) nur eine 1-Bit-Leitung aufweist.

3. Lichtgitter (10) nach einem der vorhergehenden Ansprüche,
wobei das Objektfeststellungssignal (42a-d) durch Vergleich der Empfangsintensität des Überwachungslichtstrahls (38) in dem Lichtempfänger (22, 26) mit einer Schaltschwelle gewonnen ist.

4. Lichtgitter (10) nach Anspruch 3,
wobei die Steuerung (32, 26) dafür ausgebildet ist, die Schaltschwelle dynamisch nachzuführen.

5. Lichtgitter (10) nach einem der vorhergehenden Ansprüche,
wobei die Lichtempfänger (22, 26) dafür ausgebildet sind, anhand eines Schwellenvergleichs der Empfangsintensität des Überwachungslichtstrahls (38) mit einer Vorausfallschwelle ein Absinken des Empfangspegels bei freiem Lichtweg zu erkennen.

6. Lichtgitter (10) nach Anspruch 5,
wobei die Lichtempfänger (22, 26) dafür ausgebildet sind, das Absinken des Empfangspegels bei freiem Lichtweg als binäres Vorausfallsignal (44a-d) je nach Ergebnis des Schwellenvergleichs auszugeben.

7. Lichtgitter (10) nach Anspruch 6,
wobei die Steuerung (32) dafür ausgebildet ist, die binären Vorausfallsignale (44a-d), insbesondere je Überwachungslichtstrahl (38), in einem Zähler (46) zu akkumulieren und bei Überschreiten oder Unterschreiten eines Vorgabezählerstandes die Schaltschwelle und/oder die Vorausfallschwelle anzupassen.

8. Lichtgitter (10) nach einem der Ansprüch 5 bis 7,
wobei ein zweiter Bus (34) vorgesehen ist, um das Vorausfallsignal (44a-d) von den Lichtempfängern (22, 26)) zu der Steuerung (32) zu kommunizieren, insbesondere mit nur einer 1-Bit-Leitung für das Vorausfallsignal (44a-d).

9. Lichtgitter (10) nach Anspruch 8,
wobei der erste Bus und der zweite Bus als ein gemeinsamer Bus (34) ausgebildet sind.

10. Lichtgitter (10) nach Anspruch 9,
wobei der gemeinsame Bus (34) für die Kommunikation des Objektfeststellungssignals (42a-d) und des Vorausfallsignals (44a-d) nur eine einzige 1-Bit-Leitung aufweist, indem Objektfeststellungssignal (42a-d) und Vorausfallsignal (44a-d) einen unterschiedlichen zeitlichen Versatz erhalten.

11. Verfahren zur Überwachung eines Überwachungsbereichs (40) mit einer Vielzahl von Überwachungslichtstrahlen (38), die in Gruppen eingeteilt nacheinander aktiviert werden, um je nachdem, ob ein Überwachungslichtstrahl (38) unterbrochen ist, ein Objektfeststellungssignal (42a-d) erzeugen, wobei in einer gruppenweise parallelen Überwachungssequenz jeweils ein Überwachungslichtstrahl (38) jeder Gruppe parallel aktiviert wird und die Objektfeststellungssignale (42a-d) über einen Bus (34) an eine Steuerung (32) übertragen werden,
**dadurch gekennzeichnet,**
**dass** die Objektfeststellungssignale (42a-d) auf dem Bus (34), insbesondere mit nur einer 1-Bit-Leitung, in einem Zeitmultiplexverfahren übertragen werden, dass das Objektfeststellungssignal (42a-d) ein Schaltpuls ist, und dass das Zeitmultiplexverfahren durch eine dem Objektfeststellungssignal (42a-d) aufgeprägte, für alle Überwachungslichtstrahlen (38) einer Gruppe gemeinsame und zwischen den Gruppen unterschiedliche Verzögerung umgesetzt ist.

12. Verfahren nach Anspruch 11,
wobei anhand eines Schwellenvergleichs der Empfangsintensität des Überwächungslichtstrahls (38) mit einer Vorausfallschwelle das Absinken des Empfangspegels bei freiem Lichtweg erkannt und über ein binäres Vorausfallsignal (44a-d) an die Steuerung (32) ausgegeben wird, wobei die binären Vorausfallsignale (44a-d) in einem Zähler (46) akkumuliert werden und bei Überschreiten oder Unterschreiten eines Vorgabezählerstandes (50a-b) eine Schaltschwelle zur Erzeugung des Objektfeststellungssignals (42a-d) und/oder die Vorausfallschwelle angepasst wird.

13. Verfahren nach Anspruch 11 oder 12,
wobei das Vorausfallsignal (44a-d) über einen zweiten Bus (34) mit nur einer 1-Bit-Leitung an die Steuerung (32) übertragen wird, wobei insbesondere erster und zweiter Bus als ein gemeinsamer Bus (34) ausgebildet sind, bei dem die gleiche 1-Bit-Leitung durch ein Zeitmultiplexverfahren sowohl für die Übertragung der Objektfeststellungssignale (42a-d) als auch der Vorausfallsignale (44a-d) genutzt wird.

## Claims

1. A light grid (10) having a plurality of light transmitters (14) for transmitting a respective monitoring light beam (38) and having a plurality of associated light receivers (22) to generate an object detection signal (42a-d) depending on the reception of the monitoring light beam, having a control (30, 32) which is configured to divide the monitoring light beams (38) into groups and to consecutively activate the monitoring light beams (38) of the groups, wherein, in a group-wise parallel monitoring sequence, a respective monitoring light beam (38) of each group is activated in parallel, as well as having a first bus (34) via which the object detection signals can be output to the control (32) by the light receivers (22, 26), **characterized in that** the light receivers (22, 26) are configured to output the object detection signals to the control (32) in a time multiplex process, **in that** the object detection signal (42a-d) is a switching pulse, and **in that** the time multiplex process is implemented by a delay applied to the switching pulse, the delay being a delay common to all monitoring light beams (38) of a group and differing between the groups.

2. The light grid (10) in accordance with claim 1,
wherein the first bus (34) has only a 1-bit line for object detection signals (42a-d).

3. The light grid (10) in accordance with any of the preceding claims,
wherein the object detection signal (42a-d) is acquired by comparison of the reception intensity of the monitoring light beam (38) in the light receiver (22, 26) with a switching threshold.

4. The light grid (10) in accordance with claim 3,
wherein the control (32, 26) is configured to track the switching threshold dynamically.

5. The light grid (10) in accordance with any of the preceding claims, wherein the light receivers (22, 26) are configured to recognize a dropping of the reception level with a free light path using a threshold comparison of the reception intensity of the monitoring light beam (38) with a prefailure threshold.

6. The light grid (10) in accordance with claim 5,
wherein the light receivers (22, 26) are configured to output the dropping of the reception level with a free light path as a binary prefailure signal (44a-d) depending on the result of the threshold comparison.

7. The light grid (10) in accordance with claim 6,
wherein the control (32) is configured to accumulate the binary prefailure signals (44a-d) in a counter (46), in particular per monitoring light beam (38), and to adapt the switching threshold and/or the prefailure threshold if a preset count is exceeded or fallen below.

8. The light grid (10) in accordance with any of claims 5 to 7, further comprising a second bus (34) in order to communicate the prefailure signal (44a-d) from the light receivers (22, 26) to the control (32), in particular with only a 1-bit line for the prefailure signal (44a-d).

9. The light grid (10) in accordance with claim 8,
wherein the first bus and the second bus are configured as a common bus (34).

10. The light grid (10) in accordance with claim 9,
wherein the common bus (34) for the communication of the object detection signal (42a-d) and of the prefailure signal (44a-d) only has a single 1-bit line in which the object detection signal (42a-d) and the prefailure signal (44a-d) have a different time offset.

11. A method of monitoring a monitored zone (40) having a plurality of monitoring light beams (38) which, divided into groups, are consecutively activated to generate an object detection signal (42a-d) depending on whether a monitoring light beam (38) is interrupted, wherein, in a group-wise parallel monitoring sequence, a respective monitoring light beam (38) of each group is activated in parallel and the object detection signals (42a-d) are transmitted to a control (32) via a bus (34),
**characterized in that** the object detection signals (42a-d) are transmitted in a time multiplex process on the bus (34), in particular with only a 1-bit line, **in that** the object detection signal (42a-d) is a switching pulse, and **in that** the time multiplex process is implemented by a delay applied to the switching pulse, the delay being a delay common to all monitoring light beams (38) of a group and differing between the groups.

12. The method in accordance with claim 11,
wherein the dropping of the reception signal with a free light path is recognized using a threshold comparison of the reception intensity of the monitoring light beam (38) with a prefailure threshold and is output to the control (32) via a binary prefailure signal (44a-d), wherein the binary prefailure signals (44a-d) are accumulated in a counter (46) and a switching threshold for generating the object detection signal (42a-d) and/or the prefailure threshold is adapted when a default prefailure count (50a-b) is exceeded or fallen below.

13. The method in accordance with claim 11 or 12,
wherein the prefailure signal (44a-d) is transmitted to the control (32) via a second bus (34) with only a 1-bit line, and wherein in particular the first bus and the second bus are configured as a common bus (34) in which the same 1-bit line is used by a time multiplex process for the transmission of both the object detection signals and the prefailure signals (44a-d).

## Revendications

1. Grille lumineuse (10) comprenant une pluralité d'émetteurs de lumière (14) pour émettre respectivement un rayon de lumière de surveillance (3 8) et une pluralité de récepteurs de lumière (22) associés, afin d'engendrer, selon la réception du rayon de lumière de surveillance (38), un signal de constatation d'objet (42a-d), comprenant une commande (30, 32) qui est réalisée pour organiser les rayons de lumière de surveillance (38) en groupes et activer les uns après les autres les rayons de lumière de surveillance (38) des groupes, de sorte que dans une séquence de surveillance parallèle groupe par groupe un rayon de lumière de surveillance (38) de chaque groupe est respectivement activé en parallèle, et comprenant un premier bus (34) via lequel les signaux de constatation d'objet peuvent être délivrés depuis les récepteurs de lumière (22, 26) vers la commande (32), **caractérisée en ce que**
les récepteurs de lumière (22, 26) sont réalisés pour délivrer à la commande (32) des signaux de constatation d'objet dans une procédure à multiplexage temporel, **en ce que** le signal de constatation d'objet (42a-d) est une impulsion de commutation, et **en ce que** la procédure à multiplexage temporel est mise en oeuvre au moyen d'un retard appliqué au signal de constatation d'objet (42a-d), commun pour tous les rayons de lumière de surveillance (38) d'un groupe, et différent entre les groupes.

2. Grille lumineuse (10) selon la revendication 1,
dans laquelle le premier bus (34) comprend uniquement une ligne à 1 bit pour les signaux de constatation d'objet (42a-d).

3. Grille lumineuse (10) selon l'une des revendications précédentes,
dans laquelle le signal de constatation d'objet (42a-d) est obtenu par comparaison de l'intensité de réception du rayon de lumière de surveillance (38) dans le récepteur de lumière (22, 26) avec un seuil de commutation.

4. Grille lumineuse (10) selon la revendication 3,
dans laquelle la commande (32, 26) est réalisée pour réajuster le seuil de commutation de manière dynamique.

5. Grille lumineuse (10) selon l'une des revendications précédentes,
dans laquelle les récepteurs de lumière (22, 26) sont réalisés pour reconnaître, au moyen d'une comparaison de seuil de l'intensité de réception du rayon de lumière de surveillance (3 8) avec un seuil de prédéfaillance, un abaissement du niveau de réception pour un trajet de lumière libre.

6. Grille lumineuse (10) selon la revendication 3,
dans laquelle les récepteurs de lumière (22, 26) sont réalisés pour délivrer l'abaissement du niveau de réception pour un trajet de lumière libre sous forme de signal de pré-défaillance (44a-d) binaire selon le résultat de la comparaison de seuil.

7. Grille lumineuse (10) selon la revendication 6,
dans laquelle la commande (32) est réalisée pour accumuler les signaux de pré-défaillance binaires (44a-d), en particulier pour chaque rayon de lumière de surveillance (38), dans un compteur (46) et, en cas de dépassement ou de passage au-dessous d'un comptage prédéterminé, pour adapter le seuil de commutation et/ou le seuil de pré-défaillance.

8. Grille lumineuse (10) selon l'une des revendications 5 à 7,
dans laquelle il est prévu un second bus (34) afin de communiquer le signal de pré-défaillance (44a-d) depuis les récepteurs de lumière (22, 26) à la commande (32), en particulier uniquement avec une ligne à 1 bit pour le signal de pré-défaillance (44a-d).

9. Grille lumineuse (10) selon la revendication 8,
dans laquelle le premier bus et le second bus sont réalisés sous forme de bus commun (34).

10. Grille lumineuse (10) selon la revendication 9,
dans laquelle le bus commun (34) pour la communication du signal de constatation d'objet (42a-d) et du signal de pré-défaillance (44a-d) comprend seulement une unique ligne à 1 bit, du fait que le signal de constatation d'objet (42a-d) et le signal de pré-défaillance (44a-d) présentent un décalage temporel différent.

11. Procédé pour la surveillance d'une zone de surveillance (40) avec une pluralité de rayons de lumière de surveillance (38) qui sont activés les uns après les autres en étant organisés en groupes, afin d'engendrer un signal de constatation d'objet (42a-d) selon qu'un rayon de lumière de surveillance (38) est interrompu, dans lequel on active en parallèle, dans une séquence de surveillance parallèle groupe par groupe, un rayon de lumière de surveillance (38) respectif de chaque groupe, et les signaux de constatation d'objet (42a-d) sont transmis à une commande (32) via un bus (34),
**caractérisé en ce que**
les signaux de constatation d'objet (42a-d) sont transmis sur le bus (34), en particulier avec une seule ligne à 1 bit, dans une procédure à multiplexage temporel, **en ce que** le signal de constatation d'objet (42a-d) est une impulsion de commutation, et **en ce que** la procédure à multiplexage temporel est mise en oeuvre au moyen d'un retard appliqué au signal de constatation d'objet (42a-d), commun pour tous les rayons de lumière de surveillance (38) d'un groupe, et différent entre les groupes.

12. Procédé selon la revendication 11,
dans lequel on reconnaît, au moyen d'une comparaison de seuil de l'intensité de réception du rayon de lumière de surveillance (38) avec un seuil de pré-défaillance, l'abaissement du niveau de réception pour un trajet de lumière libre et on le délivre à la commande (32) via un signal de pré-défaillance binaire (44a-d), dans lequel les signaux de pré-défaillance binaires (44a-d) sont accumulés dans un compteur (46) et, en cas de dépassement ou de passage au-dessous d'un comptage prédéterminé (50a-b), on adapte un seuil de commutation pour engendrer le signal de constatation d'objet (42a-d) et/ou le seuil de pré-défaillance.

13. Procédé selon la revendication 11 ou 12,
dans lequel le signal de pré-défaillance (44a-d) est transmis à la commande (32) avec une seule ligne à 1 bit, et le premier et le second bus sont en particulier réalisés sous forme de bus commun (34) dans lequel la même ligne à 1 bit est utilisée, grâce à une procédure à multiplexage temporel, aussi bien pour la transmission des signaux de constatation d'objet (42a-d) que pour la transmission des signaux de pré-défaillance (44a-d).
